# EUROPEAN PATENT SPECIFICATION

(11) **EP 1 657 476 B1**
(45) Date of publication and mention of the grant of the patent: **04.08.2010**
(21) Application number: 05023214.9
(22) Date of filing: 25.10.2005
(51) Int. Cl.: F16H 61/40

(54) **System for the control of the tractive force of a vehicle**
Steuersystem für die Zugkraft eines Fahrzeugs
Système de commande de la force de traction d'un véhicule

(30) Priority: 16.11.2004 GB 0425198
(43) Date of publication of application: 17.05.2006
(73) Proprietor: AGCO GmbH, 87616 Marktoberdorf (DE)
(72) Inventor: Heindl, Richard, 87616 Marktoberdorf (DE); Brenninger, Martin, Dr., 87616 Marktoberdorf (DE)
(74) Representative: Morrall, Roger

(56) References cited:
- EP-A- 0 831 252
- EP-A- 0 943 478
- DE-A1- 4 407 282
- DE-A1- 19 523 963
- DE-B3- 10 310 980
- DE-C1- 4 319 280
- JP-A- 1 101 240
- JP-A- 2 283 576
- JP-A- 4 347 060
- US-A- 4 396 087
- US-A- 4 776 165

## Description

The invention relates to a system for the control of the tractive force of a vehicle, the system including the following features:-
a) a control element to be actuated by the driver,
b) an infinitely variable change-speed gear having a hydraulic circuit with a hydraulic pump and a hydraulic motor, the motor running in the two directions of rotation,
c) the hydraulic circuit also having two first proportional valves each being arranged in its own short circuit line connecting the two sides of the motor and being designed to cause a pressure drop between the two sides of the motor in either direction as necessary,
d) a second proportional valve to be controlled by the control element, one of the two first proportional valves being opened by the second proportional valve to cause the pressure drop in the required direction,

A system of this kind is known from EP 0 943 478 B1. In this system the control element which is conventional referred to as a "clutch pedal", since it reduces tractive force when pressed in a similar manner to a conventional clutch pedal in a transmission fitted with a driveline clutch when actuated by the driver. The control of the second proportional valve is performed hydraulically by the clutch pedal. The clutch pedal has a master cylinder which is connected to a sleeve cylinder of the second proportional valve. The proportional valve is biased by a spring into its closed position when the clutch pedal is not actuated. Actuating the clutch pedal displaces the sleeve cylinder to decrease the force of the spring and allow the second proportional valve to open at a lower pressure. The second proportional valve is therefore in effect opened by an amount depending on the movement of the clutch pedal. This causes one of the first proportional valves to open its short circuit line and cause a pressure drop in the hydraulic circuit to decrease the tractive force of the vehicle by an amount dependent on the movement of clutch pedal.

There are several disadvantages associated with the above hydraulic transfer of the actuation path from the clutch pedal to the second proportional valve. The second proportional valve has to have the integrated sleeve cylinder and consequently is of complex construction making the production costs high and the production of the valve itself more difficult. Furthermore, such proportional valves are larger in size and need more room to be mounted which is especially disadvantageous when used on agricultural tractors on which only a little amount of room exists for mounting. This is especially the case with respect to the region of the tractor in which drive elements, ancillaries and conduits of different kinds have to be placed.

It is the object of the invention to provide a system for the control of the tractive force of a vehicle which is cheaper and needs little room to be mounted.

In accordance with the invention, in a system for the control of the tractive force of a vehicle of the kind described in the opening part of claim 1, a position transmitter is provided which generates an electric output signal proportional to the position of the control element, the position transmitter is connected to an electronic control unit controlling the second proportional valve in response to the position of the control element, the second proportional valve opening when not supplied with a signal from the control unit.

The invention starts from the idea to electrically control the second proportional valve. This makes it possible that the second proportional valve is of simpler design. Valves manufactured in high volume and available at low costs from the market can be used. It is an additional advantage that these commercially available proportional valves need little room to be mounted on the vehicle. An additional element of an electric position transmitter for the control element (clutch pedal) is needed. This does not mean an increase in expenditure because vehicles normally are already provided with such a position transmitter associated with the actuation of the clutch pedal for controlling the gearing. The same is true as for the electronic control unit. Already provided electronic control units only have to be modified with respect to the controlling of the new system. The second proportional valve opens when its solenoid is not supplied with energizing current. This feature is important with respect to failure of the electronic control unit or to breakdowns of current supply. In such a case the system is immediately free of forces, meaning that the second proportional valve rapidly takes up its opened position causing a complete reduction of the tractive force in the hydraulic circuit.

An operating characteristic is stored in the electronic control unit which controls the operation of the second proportional valve to create a proportional interrelationship between the position of the control element (clutch pedal) and the amount of decrease of the tractive force. This operating characteristic may be variably adjustable to adapt the amount of reduction of the tractive force to special conditions or applications of the vehicle. It is possible to use special characteristic lines having a more inclined main part and less inclined precision control part.

A preferred embodiment of the invention provides, in the circuit of the energizing current to the solenoid of the second proportional valve, a switch which is opened when the control element (clutch pedal) is in a fully depressed or nearly fully depressed end position of the control element. Consequently, the tractive force of the vehicle can be broken rapidly, if necessary, by complete actuation of the control element.

It is further proposed to provide a measuring means in the electrical circuit to the second proportional valve. The measuring system is arranged to measure the signal (energizing current) to the second proportional valve and to supply the second proportional valve in its opened position with minimum current necessary to hold the valve closed.

This makes it possible to check the switch and its proper function by comparing the flowing current when the control element is completely actuated, with the current to be expected when the switch is in the opened position. The current to be expected in the opened position of the switch is zero and consequently a flow of a minimum current shows a failure of the switch. This can be detected by the electronic control unit and monitored when desired.

The invention will be now be described, by way of example only, with reference to the accompanying drawings in which:
- **Fig. 1**: shows a schematic illustration of the system and
- **Fig. 2**: shows a diagram of some alternative operating characteristic lines of the second proportional valve.

The system to control the tractive force of a commercial vehicle such as an agricultural tractor includes a hydrostatic branch of an infinitely variable change-speed gear and its control. The hydrostatic branch includes an adjustable pump 1 and an adjustable hydraulic motor 2. Both hydrostatic elements are arranged in a closed hydraulic circuit having two pressure lines 3, 4. One of the pressure lines 3, 4 has high pressure and the other one has low pressure, depending on the use of the vehicle and the driving direction determining the direction of rotation of the pump. The speed and the tractive force can be changed by adjustment of the pump 1 and/or of the hydraulic motor 2. However, this is not explained in detail because this function is not the main subject of the present invention. If a further description of the operation of the pump and motor circuit is required this can be found in the Applicant's previously referred to patent EP 0943478B1.

In certain situations it is necessary to decrease the tractive force for a short time, on commercial vehicles having a multi-step reduction gear, without adjusting pump 1 or motor 2 and for this purpose two first electrically adjustable pressure control valves are arranged between the pressure lines 3, 4. The pressure control valves in the following description are designated first proportional valves 5 and 6 and are arranged in short circuit lines 7, 8 connecting the pressure lines 3, 4. The inlet of the proportional valve 5 is connected with pressure line 3 while the proportional valve 6 has its inlet connected to pressure line 4. Only that proportional valve, the entrance of which is connected to the pressure line having the higher pressure can act to decrease the tractive force.

Both first proportional valves 5, 6 are of similar design and are similarly arranged. For brevity, in the following only proportional valve 5 is explained in detail. From the inlet of proportional valve 5 a pressure line 9 containing a throttle 10 is connected to one inlet of a shuttle valve 11. The same is true for the proportional valve 6. The inlet of proportional valve 6 is connected via a pressure line 12 containing a throttle 13 to the other inlet of the shuttle valve 11. The proportional valve 5 has a control inlet 15 acting in the direction to close the proportional valve 5. Consequently, the control inlet 15 is biased in a variable manner by the pressure of the pressure line 3 and in the same direction by the force of a spring 14. Proportional valve 5 also has a control inlet 16 acting in the opening direction of valve 5.

A pressure line 17 connects the exit of the shuttle valve 11 with the inlet of a second proportional valve 18. The proportional valve 18 also is designed to be a pressure control valve. The exit of proportional valve 18 is connected to a tank 19. The part of the pressure line 17 between the shuttle valve 11 and the proportional valve 18 during normal use of the vehicle is under high pressure because the pressure line 17 is always in connection to the one of the pressure lines 3 or 4 having the higher pressure.

The second proportional valve 18 is biased by the force of a spring 20 in the closing direction. On the other hand the second proportional valve 18 is biased by the pressure of pressure line 17 on its control inlet 21 in the opening direction. During normal use of the vehicle the force of spring 20 is higher than the force generated by the opening pressure on the control inlet 21 so that the proportional valve 18 remains closed. The force of the spring 20 has to be decreased to open the proportional valve 18 when necessary. This is done with a solenoid 22 acting on spring 20 and being connected with an electronic control unit 23. Electronic control unit 23 supplies the necessary energising current to the proportional valve 18 to keep the proportional valve in the desired position. The energizing current is at its maximum value when the proportional valve 18 is in its closed position. This maximum value is chosen to be higher than the energizing current just necessary to close the proportional valve 18. The proportional valve 18 under the influence of the hydraulic control pressure on its control inlet 21 begins to open when the energizing current is reduced. The second proportional valve 18 reaches its fully opened position with a decrease of the energizing current to a minimum value which is only slightly above zero.

The amount of the energizing current passed to the solenoid 22 of the second proportional valve 18 depends on the position of a control element. In the shown embodiment the control element is a clutch pedal 24. Actuation of the clutch pedal, as it is know in such vehicles, causes a decrease of the tractive force of the vehicle. A position transmitter 25 which generates an electric output signal indicative of the position of pedal 24 is connected the electronic control unit 23 which is powered by the battery 26 of the vehicle.

One or more operating characteristic are assigned to the electronic control unit 23. The characteristics governs the interrelationship between the different positions of the clutch pedal 24 and the opening pressure of the second proportional valve 18. The energizing current supplied from the electronic control unit 23 to the solenoid 22 is substantially proportional to the opening pressure of valve 18. Consequently, the characteristics control the amount of the energizing current depending on the position of the clutch pedal 24 and are signal (current) versus peal position characteristics. This is the reason for using the terms energizing current and opening pressure as synonyms.

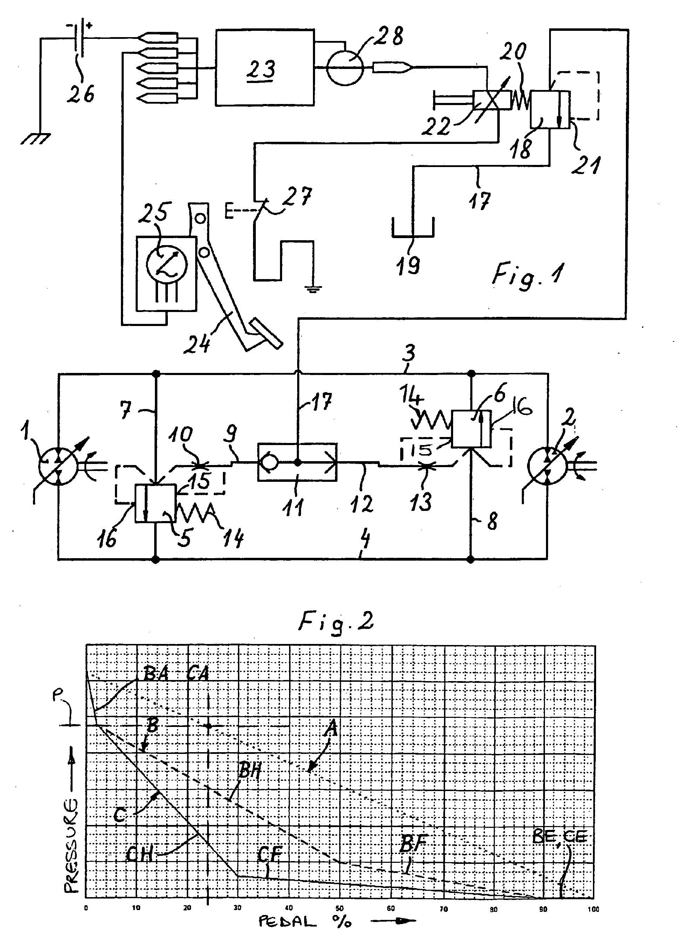

Fig. 2 shows three possible signal/position characteristic lines A, B and C. The opening pressure [bar] of the second proportional valve 18 is shown vertically and the clutch pedal position is shown horizontally in terms of % of actuation with 0% indicating that clutch pedal 24 is not actuated. 100 % actuation of the clutch pedal means a fully pressed down clutch pedal 24.

The characteristic line A has a completely linear extension showing the linear decrease of traction force (which is related to the opening pressure of valve 18) along the whole actuation path of clutch pedal 24. Characteristic lines B and C are designed to be more complex and are used for special applications of the vehicle. There are initial parts BA, CA, main parts BH, CH, precision control parts BF, CF, and end parts BE, CE. Different arrangements of the parts of the characteristic lines are possible. It is possible also during driving of the vehicle to use different characteristic lines for controlling the reduction in tractive force. The parts of the characteristic lines shown in Figure 2, meaning the interrelationship, are illustrated to be linear. However, other forms may be chosen where parts of the characteristic lines are connected to each other by curves.

It has been explained that the maximum energizing current from control unit 23 is higher than necessary to hold the proportional valve 18 in the closed position. Consequently, when starting to actuate the clutch pedal 24 it is actuated for about 2 % before the energizing current is reduced by an amount at which the proportional valve 18 does not just open. Only if the clutch pedal 24 is actuated further is there any action from the system. With respect to characteristic line A, the percentage of initial pedal movement in which the opening of valve 18 falls to the value P is substantially widened compared to characteristic lines B or C because, according to characteristic line A, such pressure P is reduced after actuation of clutch pedal 24 by 24 %. Whereas on curves B and C this pressure is reached after only 2% movement of the pedal 24. Main parts BH, CH of the characteristic lines B and C serve to reduce the tractive force rapidly over a short actuation path of the clutch pedal 24. The precision controlling parts BF and CF are used when it is necessary to control the tractive force precisely as it is necessary, for example, when manoeuvring slowly to connect working tools to the vehicle. At the end of the precision controlling parts of characteristics B an C which occurs at 90% of the movement of pedal 24, the energizing current and consequently the force of the spring 20 is reduced to a point so that the proportional valve 18 is fully opened and the tractive force of the vehicle is decreased to zero.

As far as the end parts BE, CE of characteristic lines are concerned following the precision closing parts, the energizing current is very low and does not influence the proportional valve 18. This region is used for the diagnosis of a switch 27 which is in the electric circuit of the solenoid 22. The switch 27 opens when the pedal clutch 24 is depressed completely. This function is used if the electronic control unit 23 fails and it is not possible to reduce the tractive force with the system working properly. A measuring means 28 is assigned to the electronic control unit 23 to measure the energizing current.

If the clutch pedal 24 is completely depressed and the energizing current is present this means that the switch 27 has failed. This is detected by the electronic control unit 23 causing an immediate braking and standstill of the vehicle.

The function of the system will be explained below starting from a vehicle standing still.

Clutch pedal 24 is not depressed. Consequently, switch 27 is closed, electronic control unit 23 sends the maximum energizing current to the solenoid 22 of the second proportional valve 18. Consequently, the solenoid 22 compresses the spring 20 to a maximum extend and the second proportional valve 18 is in its closed position meaning that the pressure line 17 is closed.

In a driving condition of the vehicle the infinitely variable change-speed gear is working. Adjustment of hydraulic pump 1 and/or of hydraulic motor 2 causes a high pressure in the pressure line 3 and a low pressure in the pressure line 4. Both first proportional valves 5, 6 under the influence of the force of the springs 14 and the pressure acting on the control inlets 15 are closed. Pressure line 17 is connected to the high pressure of pressure line 3 via pressure line 9.

The clutch pedal 24 is actuated if, during driving the vehicle, the tractive force of the vehicle needs to be reduced without changing the adjustment of pump 1 and hydraulic motor 2, respectively. Depending on the amount of actuation of clutch pedal 24 the electronic control unit 23 reduces the energizing current to the solenoid 22 causing the second proportional valve 18 to open by an amount depending on the position of pedal 24. Depending on the degree of opening valve 18 hydraulic medium under pressure flows from pressure line 17 to the tank 19. Due to the arrangement of throttle 10 in pressure line 9 a reduction of pressure occurs acting on the inlet entrance 15 of the first proportional valve 5. Consequently, under the influence of this reduced control pressure proportional valve 5 opens by an amount dependent on the position of pedal 24 thus causing a short circuit action in the hydraulic circuit via short circuit line 7 resulting in the desired decrease of the tractive force. Similarly, if the pump/motor circuit is operating in the other direction proportional valve 6 is opened by valve 18 to cause a short circuit via line 8 to again cause the desired reduction of the tractive force.

## Claims

1. A system for the control of the tractive force of a vehicle, including the following features:
e) a control element (24) to be actuated by the driver,
f) an infinitely variable change-speed gear having a hydraulic circuit (3,4) with a hydraulic pump (1) and a hydraulic motor (2), the motor running in the two directions of rotation,
g) the hydraulic circuit (3,4) also having two first proportional valves arranged in two short circuit lines (7,8) respectively, each of said short circuit lines connected to the motor (2), and wherein the valve arrangement provides a drop in pressure to the motor in either direction of motor rotation,
h) a second proportional valve (18) to be controlled by the control element,
i) one of the two first proportional valves (5,6) being opened by the second proportional valve (18) to cause the pressure drop in the required direction,
**characterised in that**
a position transmitter (25) generates an electric output signal proportional to the position of the control element (24), and **in that** the position transmitter (25) is connected to an electronic control unit (23) controlling the second proportional valve (18) in response to the position of the control element, the second proportional valve (18) opening when not supplied with a signal from the control unit and wherein the electronic control unit (23) is in an electric circuit to supply the second proportional valve (18) which is opened when the control element (24) is fully, or nearly fully activated and **in that** a normally closed switch (27) is arranged in the electric circuit to the second proportional valve (18), the switch being opened by the control element (24) in its fully or nearly full actuated end position.

2. A system according to claim 1, **characterised in that** the signal supplied to the second proportional valve (18) by the control unit (23) varies with the position of the control element in accordance with a predetermined signal pedal position characteristic (A,B,C).

3. A system according to claim 2, **characterised in that** the signal/pedal position characteristic (A,B,C) is variably depending on the intended use of the vehicle.

4. A system according to claim 2 or 3, **characterised in that** the signal/ pedal position characteristic (B,C) has a steeper main part (BH,CH) and a less inclined precision control part (BF,CF) where the change of signal per unit movement of the control element is less.

5. A system according to any one or more of the claims 1 to 4, **characterised in that** the electrical circuit includes a measuring means (28) for measuring the output signal of the electronic unit (23) to the second proportional valve (18).

6. A system according to any one of claim 1 to 5 **characterised in that** the electronic control unit (23) provides the second proportional valve (18) with its minimum signal in the open position of the second proportional valve.

## Patentansprüche

1. System zur Steuerung oder Regelung einer Zug- oder Schleppkraft eines Fahrzeugs mit folgenden Merkmalen:
e) einem Steuer- oder Regelelement (24), welches von dem Fahrer betätigbar ist,
f) einem stufenlos oder unbegrenzt veränderbaren Getriebe oder Getriebestufe zur Veränderung der Geschwindigkeit mit einem hydraulischen Kreis (3, 4) mit einer hydraulischen Pumpe (1) und einem hydraulischen Motor (2), wobei der Motor in zwei Rotationsrichtungen läuft,
g) wobei der hydraulische Kreis (3, 4) zwei erste Proportionalventile besitzt, die in zwei Kurzschlussleitungen (7, 8) angeordnet sind, wobei jede der Kurzschlussleitungen mit dem Motor (2) verbunden ist und wobei die Ventilanordnung einen Abfall des Drucks zu dem Motor in beide Richtungen der Rotation des Motors gewährleistet,
h) einem zweiten Proportionalventil (18), welches von dem Steuer- oder Regelelement gesteuert oder geregelt wird,
i) wobei eines der zwei ersten Proportionalventile (5, 6) durch das zweite Proportionalventil (18) geöffnet wird, um den Druckabfall in die erforderliche Richtung zu verursachen,
**dadurch gekennzeichnet, dass** ein Positionsgeber (25) ein elektrisches Ausgangssignal erzeugt, welches proportional der Position des Steuer- oder Regelelements (24) ist, und dass der Positionsgeber (25) mit einer elektronischen Steuereinheit (23) verbunden ist zur Steuerung oder Regelung des zweiten Proportionalventils (18) in Abhängigkeit von der Position des Steuer- oder Regelelements, wobei sich das zweite Proportionalventil (18) öffnet bei ausbleibender Versorgung mit einem Signal von der Steuereinheit und wobei sich die elektronische Steuereinheit (23) in einem elektrischen Kreis zur Versorgung des zweiten Proportionalventils (18) befindet, welches geöffnet ist, wenn das Steuer- oder Regelelement (24) vollständig oder nahezu vollständig betätigt ist, und dass ein normal geschlossener Schalter (27) in dem elektrischen Kreis zu dem zweiten Proportionalventil (18) angeordnet ist, wobei der Schalter geöffnet ist oder wird, wenn sich das Steuer- oder Regelelement (24) in dessen vollständig oder nahezu vollständig betätigter Endposition befindet.

2. System nach Anspruch 1, **dadurch gekennzeichnet, dass** das Signal, welches für das zweite Proportionalventil (18) von der Steuereinheit (23) bereitgestellt wird, mit der Position des Steuer- oder Regelelements veränderlich ist in Übereinstimmung mit einer vorbestimmten Signal/Pedal-Positions-Charakteristik (A, B, C).

3. System nach Anspruch 2, **dadurch gekennzeichnet, dass** die Signal/Pedal-Positions-Charakteristik (A, B, C) veränderbar ist in Abhängigkeit von der beabsichtigten Verwendung des Fahrzeugs.

4. System nach Anspruch 2 oder 3, **dadurch gekennzeichnet, dass** die Signal/Pedal-Positions-Charakteristik (B, C) einen steileren Hauptteil (BH, CH) und einen weniger geneigten Präzisions-Steuer- oder -Regelteil (BF, CF), in dem die Veränderung des Signals pro Einheit der Bewegung des Steuerelements geringer ist, besitzt.

5. System nach einem oder mehreren der Ansprüche 1 bis 4, **dadurch gekennzeichnet, dass** der elektronische Kreis ein Messelement (28) zum Messen des Ausgangssignals der elektronischen Einheit (23) für das zweite Proportionalventil (18) aufweist.

6. System nach einem der Ansprüche 1 bis 5, **dadurch gekennzeichnet, dass** die elektronische Steuer- oder Regeleinheit (23) das zweite Proportionalventil (18) mit dem minimalen Signal in der offenen Position des zweiten Proportionalventils versorgt.

## Revendications

1. Dispositif de commande de l'effort de traction d'un véhicule comportant les particularités suivantes :
e) un élément de commande (24) destiné à être activé par le conducteur,
f) une transmission à variation de vitesse continue comportant un circuit hydraulique (3, 4) avec une pompe hydraulique (1) et un moteur hydraulique (2), le moteur fonctionnant dans les deux sens de rotation,
g) le circuit hydraulique (3, 4) comportant aussi deux premières vannes proportionnelles agencées respectivement sur deux lignes de dérivation (7, 8), chacune desdites lignes de dérivation étant raccordées au moteur (2), et dans lequel l'agencement de vanne assure une perte de charge sur le moteur dans chaque sens de rotation du moteur,
h) une seconde vanne proportionnelle (18) destiné à être commandée par l'élément de commande.
i) l'une des deux premières vannes proportionnelles (5, 6) étant ouverte par la seconde vanne proportionnelle (18) afin de produire la perte de charge dans le sens requis,
**caractérisé en ce que** :
un transmetteur de position (25) produit un signal de sortie électrique proportionnel à la position de l'élément de commande (24), et **en ce que** le transmetteur de position (25) est raccordé à une unité de commande électronique (23) commandant la seconde vanne proportionnelle (18) en réponse à la position de l'élément de commande, la seconde vanne proportionnelle (18) s'ouvrant lorsqu'elle n'est pas alimentée par un signal depuis l'unité de commande et dans lequel l'unité de commande électronique (23) est dans un circuit électrique destiné à alimenter la seconde vanne proportionnelle (18) qui est ouverte lorsque l'élément de commande (24) est entièrement, ou presque entièrement activé et **en ce qu'**un commutateur normalement fermé (27) est agencé dans le circuit électrique vers la seconde vanne proportionnelle (18), le commutateur étant ouvert par l'élément de commande (24) dans sa position extrême entièrement activée ou presque.

2. Dispositif selon la revendication 1, **caractérisé en ce que** le signal délivré à la seconde vanne proportionnelle (18) par l'unité de commande (23) varie avec la position de l'élément de commande selon une caractéristique signal/position de pédale prédéterminée (A, B, C).

3. Dispositif selon la revendication 2, **caractérisé en ce que** la caractéristique signal/position de pédale (A, R, C) est variable en fonction de l'utilisation souhaitée du véhicule.

4. Dispositif selon la revendication 2 ou 3, **caractérisé en ce que** la caractéristique signal/position de pédale (B, C) comporte une partie principale plus inclinée (RH, CH) et une partie de commande de précision moins inclinée (BF, CF) dans laquelle la variation du signal par unité de déplacement de l'élément de commande est plus faible.

5. Dispositif selon l'une quelconque ou plusieurs des revendications 1 à 4, **caractérisé en ce que** le circuit électrique comporte un moyen de mesure (28) afin de mesurer le signal de sortie de l'unité électronique (23) vers la seconde vanne proportionnelle (18).

6. Dispositif selon l'une quelconque des revendications 1 à 5, **caractérisé en ce que** l'unité de commande électronique (23) délivre à la seconde vanne proportionnelle (18) son signal minimum dans la position ouverte de la seconde vanne proportionnelle.
